# FASCICULE DE BREVET EUROPEEN

(11) **EP 1 006 533 B1**
(45) Date de publication et mention de la délivrance du brevet: **24.05.2006**
(21) Numéro de dépôt: 99402824.9
(22) Date de dépôt: 15.11.1999
(51) Int. Cl.: G21C 13/02

(54) **Cuve d'un réacteur nucléaire à eau sous pression comportant un dispositif de tranquillisation de la circulation d'eau de refroidissement en fond de cuve**
Druckbehälter für einen Druckwasserreaktor mit zugehöriger Vorrichtung zur Beruhigung der Kühlwasserströmung im Behälterboden
Vessel for a pressurized water reactor with a device for stilling cooling water flow in vessel bottom head

(30) Priorité: 01.12.1998 FR 9815144
(43) Date de publication de la demande: 07.06.2000
(73) Titulaire: FRAMATOME, 92400 Courbevoie (FR)
(72) Inventeur: Barois, Guy, 92600 Asnieres (FR); Abou Rjeily, Yves, 75018 Paris (FR)
(74) Mandataire: Bouget, Lucien

(56) Documents cités:
- EP-A- 0 238 390
- EP-A- 0 328 447
- GB-A- 1 252 519
- US-A- 4 696 792

## Description

L'invention concerne une cuve d'un réacteur nucléaire à eau sous pression comportant un dispositif de tranquillisation de la circulation de l'eau de refroidissement dans le fond de la cuve.

Les réacteurs nucléaires à eau sous pression comportent généralement une cuve de forme générale cylindrique disposée en service avec son axe vertical, et fermée à sa partie inférieure par un fond bombé de forme généralement hémisphérique. La cuve, dans laquelle est placé le coeur du réacteur nucléaire constitué par des assemblages de combustible, comporte un ensemble d'équipements internes, appelés équipements internes inférieurs, destinés à assurer le support et le maintien des assemblages du coeur du réacteur nucléaire. Ces équipements internes inférieurs comportent en particulier une plaque de forte épaisseur, disposée horizontalement au-dessus du fond bombé de la cuve. Entre la plaque de support de coeur et le fond bombé de la cuve est délimité un espace de fond de cuve ayant généralement une forme hémisphérique. A la périphérie de l'espace de fond de cuve, débouche, par son extrémité inférieure, un espace annulaire délimité par la surface interne de la cuve et une enveloppe de coeur cylindrique coaxiale à la cuve.

L'eau de refroidissement du coeur du réacteur est distribuée dans l'espace annulaire à sa partie supérieure, s'écoule de haut en bas, puis pénètre dans l'espace de fond de cuve, à la partie périphérique de cet espace. A l'intérieur de l'espace de fond de cuve, le flux d'eau de refroidissement subit un changement de direction à 180°, l'eau de refroidissement étant amenée à pénétrer dans le coeur par passage à travers des ouvertures traversantes de la plaque de support de coeur et à circuler à l'intérieur des assemblages du coeur dans la direction verticale et de bas en haut.

La circulation de l'eau de refroidissement est donc fortement perturbée dans l'espace de fond de cuve. Il peut se former en particulier des tourbillons sur cet écoulement qui nuisent à l'uniformité de l'écoulement de fluide de refroidissement à l'entrée du coeur et dans le coeur, dans la direction longitudinale axiale des assemblages de combustible.

Il se forme généralement deux tourbillons intenses dans la partie inférieure de la cuve, la position de ces tourbillons pouvant varier au cours du temps.

Une distribution non uniforme de l'eau de refroidissement dans les différentes parties du coeur du réacteur nucléaire et des variations de débit au cours du temps peuvent être la cause d'un refroidissement non uniforme du coeur avec risque d'apparition de zones plus chaudes à l'intérieur du coeur, et entraîner également des sollicitations hydrauliques sur les assemblages combustibles.

De manière à tranquilliser et à homogénéiser l'écoulement d'eau de refroidissement dans le fond de la cuve des réacteurs nucléaires à eau sous pression, on a proposé d'utiliser des dispositifs de tranquillisation placés à l'intérieur de l'espace de fond de cuve et généralement suspendus en-dessous de la plaque de support de coeur.

Par exemple, on a proposé des dispositifs constitués par des plaques percées qui sont fixés par l'intermédiaire de colonnes dans des dispositions horizontales parallèles à la plaque de support de coeur, en-dessous de la plaque de support de coeur. De tels dispositifs permettent d'atténuer l'intensité des tourbillons qui ont tendance à se former sur l'écoulement d'eau de refroidissement, dans le fond de la cuve.

De tels dispositifs n'assurent cependant pas un guidage efficace du flux d'eau de refroidissement, dans la direction verticale, vers l'entrée du coeur.

On a également proposé, dans le EP-A-0.328.447, des équipements internes inférieurs pour un réacteur nucléaire à eau sous pression comprenant une calandre délimitant une enceinte et une chambre de répartition, entre le fond de cuve et la plaque de support du coeur du réacteur. L'enceinte est traversée par des conduits d'amenée de réfrigérant dans le coeur par l'intermédiaire de la chambre de répartition. La calandre et la chambre de répartition s'étendent suivant toute la section transversale du coeur.

Le but de l'invention est de proposer une cuve d'un réacteur nucléaire à eau sous pression, de forme globalement cylindrique, disposée en service, avec son axe vertical et fermée à son extrémité inférieure par un fond bombé, comportant, au-dessus du fond bombé, une plaque de support du coeur du réacteur, dans une disposition horizontale, délimitant avec le fond bombé un espace de fond de cuve et des moyens pour diriger un flux annulaire d'eau de refroidissement sous pression de haut en bas à la périphérie de l'espace de fond de cuve, ainsi qu'un dispositif de tranquillisation du flux d'eau de refroidissement suspendu en-dessous de la plaque de support du coeur, pour tranquilliser et homogénéiser l'écoulement d'eau de refroidissement dans l'espace de fond de cuve, avant que l'eau de refroidissement ne pénètre dans le coeur du réacteur par des ouvertures traversant la plaque de support du coeur, le dispositif de tranquillisation comportant au moins une paroi cylindrique ayant un axe parallèle à l'axe de la cuve disposée coaxialement par rapport à la cuve de réacteur nucléaire à l'intérieur de l'espace de fond de cuve, le dispositif de tranquillisation permettant non seulement de tranquilliser et d'homogénéiser l'écoulement d'eau de refroidissement mais encore de canaliser cette eau de refroidissement à l'entrée du coeur, le dispositif pouvant d'autre part être monté facilement sur les équipements internes inférieurs du réacteur nucléaire, sans limiter les possibilités de démontage, de manutention et de maintenance des équipements internes inférieurs, et d'inspection du fond de cuve.

Dans ce but, la paroi cylindrique présente l'une des formes suivantes :
- paroi cylindrique à section circulaire dont le diamètre est inférieur à 60 % du diamètre intérieur d'une partie cylindrique de la cuve ;
- paroi ayant des génératrices parallèles entre elles et à l'axe de la paroi et une section transversale ayant la forme d'un contour fermé non circulaire,
et elle s'étend sur une hauteur comprise entre 15 et 40 % de la hauteur maximale, dans la direction axiale, de l'espace de fond de cuve.

Afin de bien faire comprendre l'invention, on va décrire, à titre d'exemples, plusieurs modes de réalisation d'un dispositif de tranquillisation de l'écoulement dans le fond de la cuve d'un réacteur nucléaire à eau sous pression.

La figure 1 est une vue en coupe axiale de la partie inférieure de la cuve d'un réacteur nucléaire à eau sous pression comportant un dispositif de tranquillisation suivant l'invention.

Les figures 2, 3 et 4 sont des vues en coupe axiale de dispositifs de tranquillisation d'une cuve de réacteur suivant l'invention et suivant trois variantes de réalisation.

La figure 5 est une vue de dessus d'un dispositif de tranquillisation suivant l'invention.

La figure 6 est une vue en coupe axiale suivant 6-6 de la figure 5.

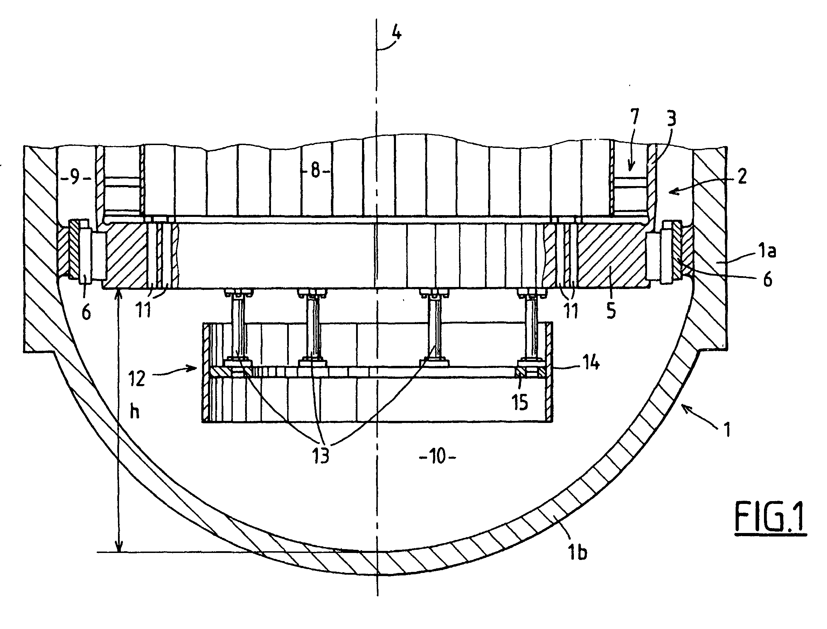

Sur la figure 1, on voit la partie inférieure de la cuve d'un réacteur nucléaire à eau sous pression désignée de manière générale par le repère 1.

La cuve 1 comporte une enveloppe cylindrique 1a constituée par des viroles de forte épaisseur soudées bout à bout et un fond bombé de forme hémisphérique 1b rapporté et soudé à la partie inférieure de l'enveloppe cylindrique 1a.

La cuve 1 renferme les équipements internes inférieurs 2 du réacteur nucléaire qui comportent en particulier une enveloppe de coeur 3 de forme cylindrique qui est disposée coaxialement à l'intérieur de la cuve 1 dont l'axe 4 est vertical et une plaque de support de coeur 5 de forte épaisseur. La plaque de support de coeur 5 est soudée à l'extrémité inférieure de l'enveloppe de coeur 3 qui assure la suspension de la plaque de support de coeur à l'intérieur de la cuve. De plus, la plaque de support de coeur 5 est immobilisée à l'intérieur de la cuve par des cales 6 réparties autour de l'axe 4 de la cuve et comportant des parties soudées sur la paroi intérieure de la cuve, à l'extrémité inférieure de l'enveloppe cylindrique 1a, au-dessus du fond bombé 1b.

Le coeur 8 du réacteur nucléaire est constitué par des assemblages de combustible de forme prismatique juxtaposés, reposant par leur partie d'extrémité inférieure sur la surface supérieure de la plaque de support de coeur 5.

Les assemblages de combustible constituant le coeur 8 du réacteur nucléaire sont maintenus à l'intérieur de l'enveloppe de coeur 3, par un cloisonnement 7.

La plaque de support de coeur 5 et le fond bombé 1b délimitent entre eux un espace de fond de cuve 10 de forme hémisphérique.

Entre la surface interne de l'enveloppe cylindrique 1a de la cuve 1 et l'enveloppe de coeur 3 est ménagé un espace annulaire 9 communiquant à sa partie inférieure, au niveau de la plaque de support de coeur 5, avec l'espace de fond de cuve 10.

De l'eau de refroidissement du réacteur nucléaire est introduite dans la partie supérieure de l'espace annulaire 9 (non représentée sur la figure 1), de manière que l'eau de refroidissement circule sous la forme d'un flux annulaire, de haut en bas, dans l'espace 9, puis pénètre dans l'espace de fond de cuve 10, dans sa partie supérieure périphérique.

A l'intérieur de l'espace de fond de cuve 10, la direction de circulation du flux d'eau de refroidissement change, de manière que le flux d'eau de refroidissement pénètre dans le coeur 8 du réacteur par de nombreuses ouvertures 11 traversant la plaque de support de coeur et permettant de répartir le flux d'eau de refroidissement dans toute la surface du coeur.

La plaque support de coeur 5 est traversée par au moins une ouverture (généralement quatre) à l'aplomb de chacun des assemblages de combustible du coeur 8 du réacteur.

Il est bien entendu souhaitable de répartir le flux d'eau de refroidissement de manière la plus homogène possible, dans l'ensemble des ouvertures traversant la plaque de support de coeur 5, de manière à assurer une alimentation optimale de chacun des assemblages du coeur du réacteur nucléaire. Cependant, à l'intérieur de l'espace de fond de cuve 10, l'écoulement d'eau de refroidissement sous pression du réacteur est fortement perturbé et en particulier des tourbillons sont susceptibles de se former dans la circulation du fluide avant qu'il ne pénètre dans le coeur 8 à travers la plaque de support de coeur 5.

La répartition de débit et de pression à l'entrée du coeur est donc fortement perturbée et le champ des pressions et des débits est généralement peu uniforme si l'écoulement n'a pas été tranquillisé à l'intérieur de l'espace de fond de cuve 10.

Selon l'invention, on dispose, à l'intérieur de l'espace de fond de cuve 10, un dispositif de tranquillisation 12 comportant une enveloppe cylindrique ou virole 14 suspendue par des colonnes 13 sous la plaque de support de coeur 5. La virole 14 est placée dans une disposition coaxiale par rapport à la cuve 1 du réacteur et présente un diamètre et une hauteur dans la direction axiale tels qu'elle s'étende sur une partie substantielle de l'espace de fond de cuve 10.

On a déterminé les dimensions souhaitables de la virole 14 pour obtenir une tranquillisation et une homogénéisation satisfaisantes de l'écoulement d'eau dans le fond de cuve. La virole 14 doit présenter un diamètre au moins égal à 30 % et au plus égal à 60 % du diamètre intérieur de la cuve. Dans le cas d'une cuve de réacteur nucléaire dont le diamètre intérieur est de 4 m environ, le diamètre de la virole 14 du dispositif de tranquillisation 12 doit donc être au moins égal à 1,20 m et au plus égal à 2,40 m. De même, la hauteur de la virole 14 doit être au moins égale à 15 % et au plus égale à 40 % de la hauteur maximale dans la direction axiale 4 de l'espace 10, c'est-à-dire de la hauteur h indiquée sur la figure 1. Dans le cas d'une cuve de réacteur nucléaire de dimensions habituelles, cette hauteur h est voisine de 2 m, de sorte que la hauteur de la virole 14 du dispositif de tranquillisation 12 doit être au moins égale à 0,30 m et au plus égale à 0,80 m.

La distance entre la surface inférieure de la plaque de support de coeur 5 et le bord supérieur de la virole 14 doit être comprise entre 10 et 35 % de la distance h, soit, dans le cas d'une cuve où la distance h est voisine de 2 m, entre 0,20 et 0,70 m.

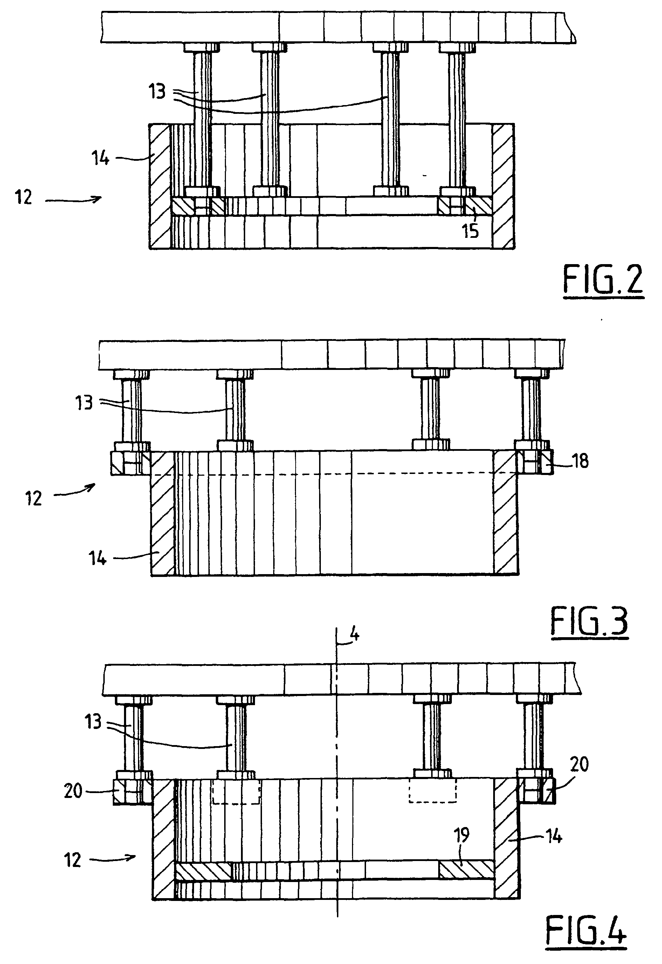

Comme il est visible sur les figures 1 et 2, le dispositif de tranquillisation 12 peut comporter un anneau de renforcement 15 fixé sur la surface interne de la virole cylindrique 14, suivant toute sa périphérie interne. Les colonnes 13 sont fixées à leur partie supérieure, par une plaque de fixation sous la plaque de support de coeur 5 et à leur partie inférieure sur l'anneau de renforcement 15 du dispositif de tranquillisation 12.

Au lieu d'un anneau de renforcement 15, on peut utiliser une plaque circulaire évidée, traversée par des ouvertures circulaires ou non, fixée par son bord périphérique externe, sur la surface interne de la virole cylindrique 14.

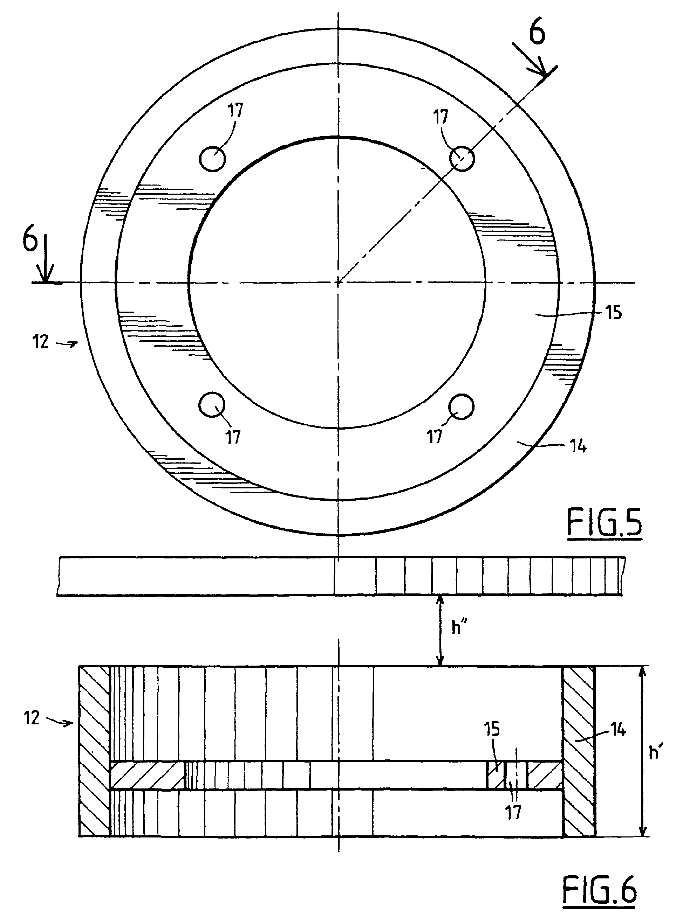

Comme il est visible sur les figures 5 et 6, la plaque ou l'anneau de renforcement 15, qui est fixé par soudage sur la surface interne de la virole 14, comporte, dans des dispositions réparties sur un cercle médian de l'anneau ou à la périphérie de la plaque, des ouvertures 17 (par exemple quatre) permettant la fixation du dispositif de tranquillisation 12 aux extrémités inférieures des colonnes de suspension 13. Les ouvertures 17 peuvent être constituées par des trous lisses à l'intérieur desquels on engage une partie d'extrémité des colonnes 13 qui peut être fixée sur l'anneau de renforcement 15 par un cordon de soudure.

Il est également possible d'assurer une fixation des colonnes sur la plaque ou l'anneau 15 par des moyens de fixation mécaniques. Cependant, dans ce cas, pour éviter qu'un élément de fixation mécanique ne se détache de la colonne et de l'anneau 15 et ne devienne un corps migrant dans le circuit primaire du réacteur nucléaire, on complète la fixation par un dispositif d'arrêt, par exemple par des points ou cordons de soudure.

Sur la figure 6, on a de plus indiqué la hauteur h' de la virole 14 du dispositif de tranquillisation 12 et la hauteur h" séparant la face inférieure de la plaque de support de coeur 5. Comme indiqué plus haut, les hauteurs h' et h" doivent être choisies à l'intérieur d'intervalles définis par rapport à la hauteur maximale h de l'espace de fond de cuve 10.

Sur les figures 3 et 4, on a représenté deux variantes de réalisation du dispositif de tranquillisation 12. Les éléments correspondants sur les figures 3 et 4 d'une part et 1, 2, 5 et 6 d'autre part portent les mêmes repères.

Dans le cas du dispositif de tranquillisation 12 selon une première variante de réalisation représentée sur la figure 3, la virole cylindrique 14 est renforcée par un anneau extérieur 18 sur lequel sont fixées les extrémités inférieures des colonnes 13 assurant la suspension du dispositif de tranquillisation 12.

Dans le cas de la seconde variante représentée sur la figure 4, la virole 14 est solidaire d'un anneau de renforcement interne 19, analogue à l'anneau de renforcement 15 du mode de réalisation représenté sur les figures 1, 2, 5 et 6.

De plus, des pattes ou oreilles de suspension 20 sont fixées sur la surface externe de la virole 14, dans sa partie supérieure, de manière à se trouver en saillie radiale par rapport à la surface externe de la virole 14. Des colonnes 13 sont fixées chacune, à leur extrémité inférieure, sur une oreille de suspension 20 qui est traversée par une ouverture permettant de recevoir la partie d'extrémité de la colonne 13.

On peut prévoir six oreilles de suspension réparties à la périphérie de la virole 14, dans des positions se déduisant l'une de l'autre par une rotation de 60° autour de l'axe 4 commun à la cuve du réacteur nucléaire et à la virole 14 du dispositif de tranquillisation 12. Bien entendu, on peut prévoir seulement trois, quatre ou cinq oreilles de suspension ou, plus de six oreilles de suspension ; dans ce cas, la suspension est assurée par un nombre correspondant de colonnes 13.

De même, bien entendu, dans le cas des modes de réalisation des figures 1, 2, 5 et 6 et 3, la suspension peut être réalisée par l'intermédiaire d'un nombre de colonnes 13 différent de quatre ou six, les ouvertures de fixation des parties d'extrémité des colonnes étant prévues dans les anneaux de renforcement 15 ou 18.

Le dispositif de tranquillisation 12 comportant la paroi cylindrique 14 qui est suspendu sous la plaque de support de coeur 5, de manière à occuper une partie de l'espace de fond de cuve 10, assure une tranquillisation de l'écoulement d'eau de refroidissement pénétrant par la partie supérieure périphérique de l'espace de fond de cuve 10 et une uniformisation de l'écoulement, de telle sorte que le champ des pressions et des débits à l'entrée du coeur 8 du réacteur est sensiblement uniforme suivant toute la section transversale du coeur. En particulier, la virole cylindrique 14 du dispositif de tranquillisation 12 permet d'annuler ou de diminuer l'intensité des tourbillons sur la circulation d'eau de refroidissement dans l'espace de fond de cuve 10. Il est également possible de confiner des tourbillons d'intensité réduite encore présents dans l'écoulement d'eau de refroidissement à l'intérieur de la paroi cylindrique 14 du dispositif de tranquillisation 12.

Ces résultats peuvent être obtenus en utilisant une paroi cylindrique 14 entièrement pleine ou une paroi 14 percée d'ouvertures, de préférence réparties de manière régulière suivant la périphérie et suivant la hauteur de la paroi cylindrique 14. Une répartition adéquate des ouvertures de la paroi cylindrique 14 permet de modifier l'effet du dispositif sur l'écoulement de l'eau de refroidissement et de régler la répartition de l'eau de refroidissement dans les ouvertures de traversée 11 de la plaque de support de coeur 5.

Le dispositif de tranquillisation 12 est d'une structure simple et peut être facilement conçu, réalisé et installé sous la plaque de support de coeur des équipements internes inférieurs du réacteur nucléaire.

Du fait que le dispositif de tranquillisation ne comporte aucun moyen de fixation sur la cuve mais se trouve entièrement suspendu aux équipements internes inférieurs, on n'effectue aucune intervention sur la paroi de la cuve pour mettre en place le dispositif suivant l'invention.

Le dispositif de tranquillisation, dont on assure le transport avec les équipements internes inférieurs, peut être facilement contrôlé dans la piscine du réacteur, lors des déchargements des équipements internes inférieurs.

L'invention ne se limite pas aux modes de réalisation qui ont été décrits dans lesquels le dispositif de tranquillisation, placé dans le fond de la cuve du réacteur nucléaire, est constitué par une enveloppe cylindrique unique à section sensiblement circulaire suspendue en-dessous de la plaque de support de coeur. De manière plus générale, le dispositif de tranquillisation peut être constitué par toute virole cylindrique ou prismatique droite quelle que soit la forme de sa section transversale, c'est-à-dire par toute paroi dont les génératrices sont toutes parallèles entre elles et parallèles à l'axe de la paroi et dont la section transversale perpendiculaire à l'axe et aux génératrices présentent la forme d'un contour fermé qui peut être différent d'un contour circulaire. Par exemple, la section transversale de la paroi du dispositif de tranquillisation peut présenter une forme elliptique ou polygonale.

La signification de parois cylindriques dans le texte de la description et dans les revendications du présent brevet s'étend donc à des parois à section non circulaire et à des parois de forme prismatique droite.

Au lieu d'une seule paroi cylindrique, le dispositif de tranquillisation de la cuve de réacteur nucléaire suivant l'invention peut comporter au moins deux et plus généralement une pluralité de parois cylindriques à axes parallèles suspendues sous la plaque de support de coeur, dans des dispositions accolées ou dans des dispositions coaxiales. Dans ce cas, la hauteur, dans la direction axiale, des différentes parois cylindriques est toujours comprise entre 15 et 40 % de la hauteur maximale de l'espace de fond de cuve. Le dispositif de tranquillisation peut comporter au moins deux viroles accolées ou coaxiales, disposées à l'intérieur de l'espace de fond de cuve, dans un volume cylindrique ayant pour axe l'axe de la cuve et un diamètre compris entre 30 et 60 % du diamètre intérieur de la cuve.

Les éléments constituant le dispositif de tranquillisation et en particulier l'enveloppe cylindrique peuvent être réalisés en tout matériau métallique pouvant supporter les conditions d'environnement régnant dans le fond de la cuve ; en particulier, la virole cylindrique peut être réalisée en un acier faiblement allié, éventuellement revêtu d'acier inoxydable, ou en un acier inoxydable.

L'invention s'applique dans le cas de tout réacteur nucléaire à eau sous pression comportant une cuve dans laquelle une plaque de support de coeur délimite un espace de fond de cuve recevant un flux annulaire d'eau de refroidissement sous pression.

## Revendications

1. Cuve d'un réacteur nucléaire à eau sous pression de forme globalement cylindrique, disposée en service avec son axe (4) vertical, et fermée à son extrémité inférieure par un fond bombé (1b), comportant au-dessus du fond bombé (1 b) une plaque de support (5) du coeur (8) du réacteur, dans une disposition horizontale, délimitant avec le fond bombé (1b) un espace de fond de cuve (10) et des moyens pour diriger un flux annulaire d'eau de refroidissement sous pression de haut en bas à la périphérie de l'espace de fond de cuve (10), ainsi qu'un dispositif de tranquillisation (12) du flux d'eau de refroidissement suspendu en-dessous de la plaque (5) de support du coeur (8), pour tranquilliser et homogénéiser l'écoulement d'eau de refroidissement dans l'espace de fond de cuve (10) avant que l'eau de refroidissement ne pénètre dans le coeur (8) du réacteur par des ouvertures (11) traversant la plaque de support (5) du coeur (8), le dispositif de tranquillisation (12) comportant au moins une paroi cylindrique (14) ayant un axe parallèle à l'axe (4) de la cuve disposée coaxialement par rapport à la cuve (1) de réacteur nucléaire à l'intérieur de l'espace de fond de cuve, **caractérisée par le fait que** la paroi cylindrique (14) présente l'une des formes suivantes :
- paroi cylindrique à section circulaire dont le diamètre est inférieur à 60 % du diamètre intérieur d'une partie cylindrique (1a) de la cuve (1)
- paroi ayant des génératrices parallèles entre elles et à l'axe de la paroi et une section transversale ayant la forme d'un contour fermé non circulaire,
et qu'elle s'étend sur une hauteur comprise entre 15 et 40 % de la hauteur maximale, dans la direction axiale, de l'espace de fond de cuve (10).

2. Cuve de réacteur nucléaire suivant la revendication 1, **caractérisée par le fait que** le dispositif de tranquillisation (12) comporte une seule paroi cylindrique (14) à section circulaire disposée coaxialement par rapport à la cuve (1) de réacteur nucléaire et ayant un diamètre compris entre 30 et 60 % du diamètre intérieur d'une partie cylindrique (1a) de la cuve (1).

3. Cuve de réacteur nucléaire suivant la revendication 2, **caractérisée par le fait que** la paroi cylindrique (14) comporte une extrémité supérieure située à une distance d'une face inférieure de la plaque de support de coeur (5), dans la direction axiale (4) de la cuve, comprise entre 10 et 35 % de la hauteur maximale (h) de l'espace de fond de cuve (10).

4. Cuve de réacteur nucléaire suivant l'une quelconque des revendications 2 et 3, **caractérisée par le fait que** la paroi cylindrique (14) est une paroi entièrement pleine.

5. Cuve de réacteur nucléaire suivant l'une quelconque des revendications 2 et 3, **caractérisée par le fait que** la paroi cylindrique (14) est traversée par des ouvertures.

6. Cuve de réacteur nucléaire suivant l'une quelconque des revendications 1 à 5, **caractérisée par le fait que** la paroi cylindrique (14) du dispositif de tranquillisation (12) comporte une plaque de renforcement (15) fixée sur une surface de la paroi cylindrique (14) dans une disposition coaxiale à la paroi cylindrique (14) et que la paroi cylindrique (14) du dispositif de tranquillisation (12) est suspendue sous la plaque de support de coeur (5), par l'intermédiaire de colonnes verticales (13) qui sont fixées, à l'une de leurs extrémités ou extrémité supérieure, sur la plaque de support de coeur et, par une seconde extrémité ou extrémité inférieure, sur la plaque de renforcement (15, 18) de la paroi cylindrique (14).

7. Cuve de réacteur nucléaire suivant la revendication 6, **caractérisée par le fait que** la plaque de renforcement (15) de la paroi cylindrique (14) est un anneau fixé sur une surface interne de la paroi cylindrique (14).

8. Cuve de réacteur nucléaire suivant la revendication 6, **caractérisée par le fait que** la plaque de renforcement (15) de la paroi cylindrique (14) est une plaque circulaire traversée par des ouvertures, par exemple circulaires, fixée par son bord périphérique externe sur une surface interne de la paroi cylindrique (14).

9. Cuve de réacteur nucléaire suivant la revendication 6, **caractérisée par le fait que** la plaque de renforcement est un anneau de renforcement (18) fixé sur la surface extérieure de la paroi cylindrique (14), dans une zone voisine d'une extrémité supérieure de la paroi cylindrique (14).

10. Cuve de réacteur nucléaire suivant l'une quelconque des revendications 1 à 5, **caractérisée par le fait que** le dispositif de tranquillisation (12) comporte au moins trois oreilles de suspension (20) fixées sur une surface externe de la paroi cylindrique (14) au voisinage de son extrémité supérieure et que la paroi cylindrique (14) est suspendue sous la plaque de support de coeur (5), par l'intermédiaire d'au moins trois colonnes (13) fixées par une première extrémité, ou extrémité supérieure, sur la plaque de support de coeur (5) et par une seconde extrémité, ou extrémité inférieure, sur une oreille de suspension (20).

11. Cuve de réacteur nucléaire suivant la revendication 1, **caractérisée par le fait que** le dispositif de tranquillisation (12) comporte au moins deux parois cylindriques (14) suspendues sous la plaque de support de coeur (5) dans une disposition coaxiale.

## Claims

1. Vessel of a pressurised water nuclear reactor, which vessel is generally cylindrical and is arranged in use with its axis (4) upright and is closed at its lower end by a curved base (1b), the vessel comprising above the curved base (1b) a support plate (5) for the core (8) of the reactor, in a horizontal arrangement, delimiting with the curved base (1b) a vessel bottom head space (10), and means for directing an annular flow of pressurised cooling water from the top to the bottom at the periphery of the vessel bottom head space (10), and also a calming device (12) for the flow of cooling water which is suspended beneath the support plate (5) of the core (8), in order to calm and homogenise the flow of cooling water in the vessel bottom head space (10) before the cooling water enters the core (8) of the reactor by way of openings (11) extending through the support plate (5) of the core (8), the calming device (12) comprising at least one cylindrical wall (14) which has an axis parallel with the axis (4) of the vessel and which is arranged coaxially relative to the nuclear reactor vessel (1) inside the vessel bottom head space, **characterised in that** the cylindrical wall (14) has one of the following forms:
- a cylindrical wall of circular cross-section, the diameter of which is less than 60% of the inside diameter of a cylindrical portion (1a) of the vessel (1),
- a wall having generatrices which are parallel with each other and with the axis of the wall and a cross-section having the shape of a non-circular closed contour,
and **in that** it extends to a height of from 15 to 40% of the maximum height, in the axial direction, of the vessel bottom head space (10).

2. Nuclear reactor vessel according to claim 1, **characterised in that** the calming device (12) comprises a single cylindrical wall (14) of circular cross-section arranged coaxially relative to the nuclear reactor vessel (1) and having a diameter of from 30 to 60% of the inside diameter of a cylindrical portion (1a) of the vessel (1).

3. Nuclear reactor vessel according to claim 2, **characterised in that** the cylindrical wall (14) comprises an upper end located at a distance from a lower face of the core support plate (5), in the axial direction (4) of the vessel, of from 10 to 35% of the maximum height (h) of the vessel bottom head space (10).

4. Nuclear reactor vessel according to either claim 2 or claim 3, **characterised in that** the cylindrical wall (14) is a completely solid wall.

5. Nuclear reactor vessel according to either claim 2 or claim 3, **characterised in that** openings extend through the cylindrical wall (14).

6. Nuclear reactor vessel according to any one of claims 1 to 5, **characterised in that** the cylindrical wall (14) of the calming device (12) comprises a reinforcing plate (15) secured to a surface of the cylindrical wall (14) in an arrangement coaxial with the cylindrical wall (14) and **in that** the cylindrical wall (14) of the calming device (12) is suspended beneath the core support plate (5) by means of upright columns (13) which are secured, at one of their ends, or upper end, to the core support plate and, by a second end, or lower end, to the reinforcing plate (15, 18) of the cylindrical wall (14).

7. Nuclear reactor vessel according to claim 6, **characterised in that** the reinforcing plate (15) of the cylindrical wall (14) is a ring secured to an internal surface of the cylindrical wall (14).

8. Nuclear reactor vessel according to claim 6, **characterised in that** the reinforcing plate (15) of the cylindrical wall (14) is a circular plate through which openings, for example circular openings, extend and which is secured by its external peripheral edge to an internal surface of the cylindrical wall (14).

9. Nuclear reactor vessel according to claim 6, **characterised in that** the reinforcing plate is a reinforcing ring (18) secured to the external surface of the cylindrical wall (14), in a region next to an upper end of the cylindrical wall (14).

10. Nuclear reactor vessel according to any one of claims 1 to 5, **characterised in that** the calming device (12) comprises at least three suspension lugs (20) secured to an external surface of the cylindrical wall (14) in the vicinity of its upper end and **in that** the cylindrical wall (14) is suspended beneath the core support plate (5) by way of at least three columns (13) which are secured by a first end, or upper end, to the core support plate (5) and by a second end, or lower end, to a suspension lug (20).

11. Nuclear reactor vessel according to claim 1, **characterised in that** the calming device (12) comprises at least two cylindrical walls (14) suspended beneath the core support plate (5) in a coaxial arrangement.

## Patentansprüche

1. Druckwasserreaktorbehälter von global zylindrischer Form, betrieben mit vertikal angeordneter Achse (4), an seinem unteren Ende abgeschlossen durch einen gewölbten Boden (1b), umfassend eine horizontal angeordnete Tragplatte (5) des Reaktorkerns (8) über dem gewölbten Boden (1b), die zusammen mit dem gewölbten Boden (1b) einen Behälterbodenraum (10) abgrenzt, und Einrichtungen, um einen kreisförmigen Druckkühtwasserstrom von oben nach unten in die Peripherie des Behälterbodenraums (10) zu leiten, sowie eine Beruhigungsvorrichtung (12) des Kühlwasserstroms, aufgehängt unter der Tragplatte (5) des Reaktorkerns (8), um die Kühlwasserströmung in dem Behälterbodenraum (10) zu beruhigen und zu homogenisieren, bevor das Kühlwasser durch die Tragplatte (5) des Reaktorkerns (8) durchquerende Öffnungen (11) in den Reaktorkern (8) eindringt, wobei die Beruhigungsvorrichtung (12) wenigstens eine zylindrische Wand (14) mit einer zur Achse (4) des Behälters parallelen Achse umfasst und im Innern des Behälterbodenraums in Bezug auf den Kemreaktorbehälter (1) koaxiatangeordnet ist,
**dadurch gekennzeichnet, dass** die zylindrische Wand (14) eine der folgenden Formen aufweist:
- zylindrische Wand mit kreisrundem Querschnitt, deren Durchmesser kleiner ist als 60 % des Innendurchmessers eines zylindrischen Teils (1a) des Behälters (1),
- Wand, deren Mantellinien zueinander und zur Achse der Wand parallel sind und deren Querschnitt die Form einer nicht-kreisrunden geschlossenen Kontur hat,
und dass sie sich über eine zwischen 15 und 40 % der maximalen Höhe des Bodenraums des Behälters (10) in der axialen Richtung erstreckt.

2. Druckwasserreaktorbehälter nach Anspruch 1, **dadurch gekennzeichnet, dass** die Beruhigungsvorrichtung (12) eine einzige zylindrische Wand mit kreisrundem Querschnitt umfasst, die in Bezug auf den Behälter (1) des Kernreaktors koaxial angeordnet ist und einen zwischen 30 und 60 % des Innendurchmessers eines zylindrischen Teils (1a) des Behälters enthaltenen Durchmesser hat.

3. Druckwasserreaktorbehälter nach Anspruch 2, **dadurch gekennzeichnet, dass** die zylindrische Wand (14) ein oberes Ende umfasst, dessen Abstand von einer Unterseite der Reaktorkern-Tragplatte (5) in der axialen Richtung (4) des Behälters zwischen 10 und 35 % der maximalen Höhe (h) des Behälterbodenraums (10) enthalten ist.

4. Druckwasserreaktorbehälter nach einem der Ansprüche 2 und 3, **dadurch gekennzeichnet, dass** die zylindrische Wand (14) eine ganz geschlossene Wand ist.

5. Druckwasserreaktorbehälter nach einem der Ansprüche 2 und 3, **dadurch gekennzeichnet, dass** die zylindrische Wand (14) von Öffnungen durchquert wird.

6. Druckwasserreaktorbehälter nach einem der Ansprüche 1 bis 5, **dadurch gekennzeichnet, dass** die zylindrische Wand (14) der Beruhigungsvorrichtung (12) eine Verstärkungsplatte (15) umfasst, befestigt an einer Fläche der zylindrischen Wand (14) in einer zu der zylindrischen Wand (14) koaxialen Anordnung, und dass die zylindrische Wand (14) der Beruhigungsvorrichtung (12) unter der Reaktorkerntragplatte (5) aufgehängt ist mittels vertikalen- Säulen (13); die mit einem ihrer Enden oder oberen Ende an der Reaktorkern-Tragplatte befestigt sind und mit einem zweiten Ende oder unteren Ende an der Verstärkungsplatte (15, 18) der zylindrischen Wand (14).

7. Druckwasserreaktorbehälter nach Anspruch 6, **dadurch gekennzeichnet, dass** die Verstärkungsplatte (15) der zylindrischen Wand (14) ein an einer Innenfläche der zylindrischen Wand (14) befestigter Ring ist.

8. Druckwasserreaktorbehälter nach Anspruch 6, **dadurch gekennzeichnet, dass** die Verstärkungsplatte (15) der zylindrischen Wand (14) eine kreisrunde, von zum Beispiel kreisrunden Öffnungen durchquerte Platte ist, die mit ihrem peripheren äußeren Rand an einer Innenfläche der zylindrischen Wand (14) befestigt ist.

9. Druckwasserreaktorbehälter nach Anspruch 6, **dadurch gekennzeichnet, dass** die Verstärkungsplatte ein Verstärkungsring (18) ist, befestigt an der Außenfläche der zylindrischen Wand (14), in einer einem oberen Ende der zylindrischen Wand (14) benachbarten Zone.

10. Druckwasserreaktorbehälter nach einem der Ansprüche 1 bis 5, **dadurch gekennzeichnet, dass** die Beruhigungsvorrichtung (12) wenigstens drei Aufhängeösen (20) umfasst, befestigt an einer Außenfläche der zylindrischen Wand (14) in der Nähe ihres oberen Endes, und dass die zylindrische Wand (14) unter der Reaktorkern-Tragplatte (5) mittels wenigstens drei Säulen (13) aufgehängt ist, die mit einem ersten Ende oder oberen Ende an der Reaktorkemtragplatte (5) befestigt sind und mit einem zweiten Ende oder unteren Ende in einer Aufhängeöse (20).

11. Druckwasserreaktorbehälter nach Anspruch 1, **dadurch gekennzeichnet, dass** die Beruhigungsvorrichtung (12) wenigstens drei zylindrische Wände (14) umfasst, aufgehängt unter der Reaktorkern-Tragplatte (5) in einer koaxialen Anordnung.
